# EUROPEAN PATENT SPECIFICATION

(11) **EP 3 884 102 B1**
(45) Date of publication and mention of the grant of the patent: **11.10.2023**
(21) Application number: 19805968.5
(22) Date of filing: 20.11.2019
(51) Int. Cl.: E01C 3/00, E01C 5/22, E01C 13/02, E01C 13/08, A63C 19/04, D04H 1/4218, D04H 1/587, A63C 19/00, E01C 13/00

(54) **SHOCK PAD FOR ARTIFICIAL SPORTS FIELDS**
STOSSDÄMPFUNG FÜR KÜNSTLICHE SPORTPLÄTZE
AMORTISSEUR POUR TERRAINS DE SPORT ARTIFICIELS

(30) Priority: 20.11.2018 EP 18207166
(43) Date of publication of application: 29.09.2021
(73) Proprietor: ROCKWOOL A/S, 2640 Hedehusene (DK)
(72) Inventor: VRIES, Linda De, 2640 Hedehusene (DK)
(74) Representative: Gill Jennings & Every LLP
(86) International application number: PCT/EP2019/081921
(87) International publication number: WO 2020/104523

(56) References cited:
- WO-A1-87/07520
- WO-A1-2004/033194
- WO-A1-2014/029873
- WO-A1-2015/135972
- US-A1- 2012 258 811

## Description

### Field of the invention

This invention relates to a shock pad, a method of making a shock pad and use of a shock pad for absorbing shock in artificial sports or playing fields.

### Background of the invention

It is known to include shock pads in sports fields, especially artificial grass fields for team-based sports such as hockey or football (soccer). Typically, sports fields must meet specific requirements for performance, durability and construction. For example, in order for sports to be played in a consistent manner, sports fields must comply with a set of standards for features such as shock absorption, energy restitution, ball rebound, ball roll, ball deviation and impact response. International governing bodies of sports (e.g. FIFA for football and FIH for hockey) set out specific requirements, which sports fields must meet in order to be officially approved.

Shock pads are used in sports fields, in particular artificial fields, to meet the above-described standards. Shock pads increase the durability of sports fields, whilst also providing the required spring for playing sports. Shock pads can also be used to prevent injuries by absorbing shock or impact. They are typically an essential part of any artificial playing field.

WO 04/033194 A1 discloses an underpad system for artificial sports fields. The purpose of the underpad is to provide an effective and safe playing field for sports such as soccer. The underpad comprises three layers made from foam, rubber or plastic.

WO 2013/060634 A1 discloses a shock pad for artificial playing fields. The purpose of the shock pad is to improve shock absorption and energy restitution characteristics of the artificial turf systems. The shock pad comprises a three-dimensional entangled mat of extruded filaments made from thermoplastic elastomeric polymer.

WO 87/07520 A1 discloses an underlay shock pad for use in playgrounds and other areas where there is a risk of children falling. The purpose of the shock pad is to prevent head injuries in children who fall. The shock pad consists of a mineral wool slab of 30 to 300 mm, having a density of 70 to 300 kg/m³. However, this shock pad would not be suitable for use in artificial playing fields, as it would not meet the set of strict requirements: it is designed instead for playgrounds.

It would be desirable to produce a shock pad that meets the specific (artificial) playing field requirements set by international governing bodies of sports, such as FIFA and FIH, but is made from a material that is more sustainable and environmentally friendly than existing foam, rubber, plastic or polymeric shock pads.

It would be desirable to produce a shock pad that is less sensitive to temperature conditions in comparison to existing foam, rubber, plastic or polymeric shock pads.

It is also a requirement of sports fields, in particular artificial sports fields, that a suitable drainage system and flood prevention system are put in place. It is important that all surface water is removed from the sports pitch at a rate which will avoid surface flooding. It is known to manufacture shock pads so that they allow for water to drain through into draining systems, since it would be undesirable for shock pads to prevent the drainage system from working effectively. It would be desirable to produce a shock pad that meets the specific playing field requirements set by international governing bodies of sports, such as FIFA and FIH, but which prevents or treats flooding and therefore results in the same performance level under all weather conditions.

A problem that exists with artificial sports fields is that they can become extremely hot in certain weather conditions. For example, surface temperatures may become as high as 90 °C under certain climatic conditions. This is undesirable for players as the surface emits heat during play, which is uncomfortable, and can result in injuries. Excessive heat also decreases the durability of the artificial surface. It would be desirable to improve the usability of artificial sports fields by decreasing the surface temperature.

There is a need for a shock pad for artificial playing fields which is improved in comparison to existing foam, rubber, plastic or polymeric shock pads. There is a need for a shock pad which is more durable and/or more resilient than existing foam, rubber, plastic or polymeric shock pads. There is a need for a shock pad that does so and also meets the standards set out by international governing bodies of sports such as FIFA for football and FIH for hockey. There is a need for a shock pad that prolongs the usability of the artificial sports field by absorbing water from the ground, and storing the water until it can dissipate back into the surrounding ground. There is a need for a shock pad that can actively prevent or treat flooding by absorbing water. There is a need for a shock pad that can prolong usability of the sports field by decreasing the surface temperature. Furthermore, there is a need for a shock pad which is environmentally acceptable and economical in terms of production, installation and use. The present invention solves these problems.

### Summary of the invention

In a first aspect of the invention, there is provided a shock pad comprising:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate;
(iii) a lower membrane layer bonded to the lower major surface of the coherent plate;
wherein the at least one coherent layer has a thickness in the range of 12 mm to 40 mm and a density in the range of 175 kg/m³ to 300 kg/m³.

In a second aspect of the invention, there is provided a method of producing a shock pad comprising the steps of:
(i) providing a coherent plate having upper and lower major surfaces, wherein the coherent plate comprises at least one coherent layer comprising man-made vitreous fibres (MMVF) bonded with a cured binder composition;
(ii) bonding the upper membrane layer to the upper major surface of the coherent plate
(iii) bonding the lower membrane layer to the lower major surface of the coherent plate
wherein the at least one coherent layer has a thickness in the range of 12 mm to 40 mm and a density in the range of 175 kg/m³ to 300 kg/m³.

In a third aspect of the invention, there is provided a method of using a shock pad to provide a shock-absorbing surface in a sports field, comprising the step of: positioning a shock pad or an array of shock pads beneath the surface of a sports field, wherein the shock pad comprises:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate,
(iii) a lower membrane layer bonded to the lower major surface of the coherent plate,
wherein the at least one coherent layer has a thickness in the range of 12 mm to 40 mm and a density in the range of 175 kg/m³ to 300 kg/m³.

In a fourth aspect of the invention, there is provided use of a shock pad for absorbing shock in a sports field, wherein the shock pad comprises:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate,
(iii) a lower membrane layer bonded to the lower major surface of the coherent plate,
wherein the at least one coherent layer has a thickness in the range of 12 mm to 40 mm and a density in the range of 175 kg/m³ to 300 kg/m³.

In a fifth aspect of the invention, there is provided use of a shock pad for absorbing and/or draining water in a sports field, wherein the shock pad comprises:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate,
(iii) a lower membrane layer bonded to the lower major surface of the coherent plate,
wherein the at least one coherent layer has a thickness in the range of 12 mm to 40 mm and a density in the range of 175 kg/m³ to 300 kg/m³.

In a sixth aspect of the invention, there is provided use of a shock pad for cooling the surface temperature of a sports field, wherein the shock pad comprises:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate,
(iii) a lower membrane layer bonded to the lower major surface of the coherent plate,
wherein the at least one coherent layer has a thickness in the range of 12 mm to 40 mm and a density in the range of 175 kg/m³ to 300 kg/m³.

### Brief Description of Figures

Figure 1 shows a shock pad according to a first embodiment of the invention.
Figure 2 shows a shock pad according to a second embodiment of the invention.
Figure 3 shows a shock pad according to the invention installed in the ground of an artificial sports field.

### Detailed description

The invention relates to a shock pad for use in sports fields, preferably artificial sports fields. The term shock pad has its normal meaning in the art. A shock pad is an underlay that is positioned underneath, often directly underneath, the surface of sports fields.

Sports fields may also be called sports grounds, playing fields or playing grounds. Sports fields include football pitches, hockey pitches, rugby pitches, cricket pitches, lawn bowling greens, lawn tennis courts, golf greens, athletic grounds and equestrian centres. The shock pad according to the present invention is particularly useful for football pitches and hockey pitches. This is because the shock pad according to the present invention meets the criteria set by football and hockey governing bodies, such as FIFA and FIH.

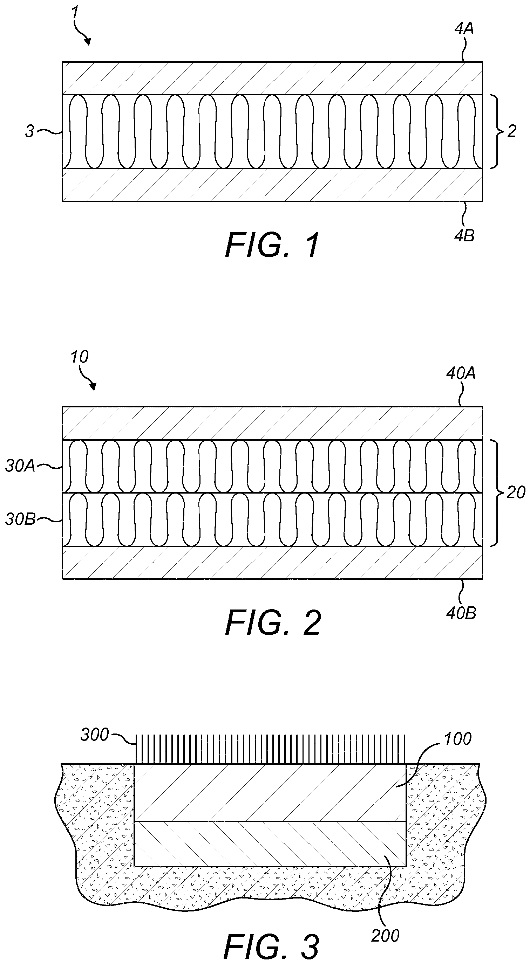

Figure 1 shows a first embodiment of the invention. The shock pad (1) according to the present invention comprises a coherent plate (2) having upper and lower major surfaces wherein the coherent plate comprises at least one coherent layer (3) comprising man-made vitreous fibres (MMVF) bonded with a cured binder composition. The shock pad further comprises an upper membrane layer (4a) bonded to the upper major surface of the coherent plate (2) and a lower membrane layer (4b) bonded to the lower major surface of the coherent plate (2).

The upper and lower major surfaces of the coherent plate are preferably generally flat or flat i.e. are level. The coherent plate is preferably cubic or cuboidal in shape.

The shock pad can have any dimension suitable for use. For example, it may have a length of 0.5 m to 10 m, preferably 1 m to 2 m, most preferably 1.2 m. It may have a width of 0.2 m to 10 m, preferably 0.75 m to 1.5 m, most preferably 1 m.

The coherent plate comprises at least one coherent layer. The coherent layer comprises man-made vitreous fibres (MMVF) bonded with a cured binder composition. The man-made vitreous fibres (MMVF) can be glass fibres, ceramic fibres, basalt fibres, slag wool, stone wool and others, but are usually stone wool fibres. Stone wool generally has a content of iron oxide at least 3% and content of alkaline earth metals (calcium oxide and magnesium oxide) from 10 to 40 %, along with the other usual oxide constituents of MMVF. These are silica; alumina; alkali metals (sodium oxide and potassium oxide) which are usually present in low amounts; and can also include titania and other minor oxides. Fibre diameter is often in the range of 3 to 20 µm, preferably 3 to 5 µm.

The coherent layer is preferably in the form of a coherent mass of MMVF i.e. a MMVF substrate. That is, the coherent layer is generally a coherent matrix of MMVF fibres bonded with a cured binder composition, which has been produced as such, or has been formed by granulating a slab of MMVF and consolidating the granulated material.

The present shock pad containing MMVF has the advantage of being more environmentally friendly than shock pads made from plastic, foam, rubber or polymeric material.

The at least one coherent layer has a thickness in the range of 12 mm to 40 mm, preferably 15 mm to 35 mm, more preferably 18 mm to 28 mm, most preferably 20 mm to 22 mm. By thickness it is meant the dimension from the upper surface of the coherent layer to the lower surface i.e. the height of the coherent layer when the shock pad is in use. The advantage of having a shock pad with a coherent layer of thickness 12 mm to 40 mm is that it achieves the desired water management properties (i.e. absorbing and draining excess water; cooling the surface of artificial sports fields) but also meets the strict requirements set by international governing bodies of sports for artificial playing fields. In addition, this size conforms to standard construction requirements which makes installation of the shock pad more convenient.

The at least one coherent layer has a density in the range of 175 kg/m³ to 300 kg/m³, preferably in the range of 220 kg/m³ to 280 kg/m³, most preferably 275 kg/m³. The advantage of having a shock pad with coherent layer of density in the range of 175 kg/m³ to 300 kg/m³ is that it achieves the optimum balance between durability and sports performance. The shock pad according to the present invention meets the sports performance requirements set by governing bodies, but is also highly durable.

The binder may be any of the binders known for use as binders for coherent MMVF products. Preferably the at least one coherent layer comprises 1.0 wt% to 6.0 wt% of cured binder composition, preferably 2.5 wt% to 4.5 wt%, most preferably 3.0 wt% to 3.8 wt% based on the eight of the coherent layer. The advantage associated with this range of 3.0 wt% to 3.8 wt% is that it allows the shock pad to have the required stiffness and elasticity. The binder composition in the present invention may be hydrophilic or hydrophobic.

The binder can be an organic hydrophobic binder, and in particular it can be a conventional heat-curable (thermosetting), binder of the type which has been used for many years in MMVF growth substrates (and other MMVF-based products). This has the advantage of convenience and economy. Thus, the binder is preferably a phenol formaldehyde resin or urea formaldehyde resin, in particular phenol urea formaldehyde (PUF) resin.

The binder may be a formaldehyde-free aqueous binder composition comprising: a binder component (A) obtainable by reacting at least one alkanolamine with at least one carboxylic anhydride and, optionally, treating the reaction product with a base; and a binder component (B) which comprises at least one carbohydrate, as disclosed in WO2004/007615. Binders of this type are hydrophilic.

WO97/07664 discloses a hydrophilic substrate that obtains its hydrophilic properties from the use of a furan resin as a binder. Binders of this type may be used in the present invention.

WO07129202 discloses a hydrophilic curable aqueous composition wherein said curable aqueous composition is formed in a process comprising combining the following components:
(a) a hydroxy-containing polymer,
(b) a multi-functional crosslinking agent which is at least one selected from the group consisting of a polyacid, salt(s) thereof and an anhydride, and
(c) a hydrophilic modifier;
wherein the ratio of (a):(b) is from 95:5 to about 35:65.

The hydrophilic modifier can be a sugar alcohol, monosaccharide, disaccharide or oligosaccharide. Examples given include glycerol, sorbitol, glucose, fructose, sucrose, maltose, lactose, glucose syrup and fructose syrup. Binders of this type can be used in the present invention.

Further, a binder composition comprising:
a) a sugar component, and
b) a reaction product of a polycarboxylic acid component and an alkanolamine component,
wherein the binder composition prior to curing contains at least 42% by weight of the sugar component based on the total weight (dry matter) of the binder components may be used in the present invention.

The binder may be as described in WO 2017/114724, wherein the binder composition prior to curing comprises the following components:
a component (i) in the form of one or more compounds selected from
- compounds of the formula, and any salts thereof: 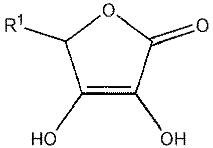 in which R1 corresponds to H, alkyl, monohydroxyalkyl, dihydroxyalkyl, polyhydroxyalkyl, alkylene, alkoxy, amine;
- compounds of the formula, and any salts thereof: 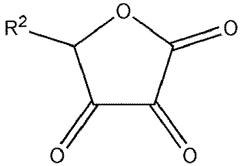
   in which R2 corresponds to H, alkyl, monohydroxyalkyl, dihydroxyalkyl, polyhydroxyalkyl, alkylene, alkoxy, amine;
   a component (ii) in the form of one or more compounds selected from the group of ammonia, amines or any salts thereof;
   a component (iii) in the form of one or more carbohydrates.

The binder composition may be as described in WO 2017/114723 wherein the binder composition prior to curing comprises the following components:
- a component (i) in form of one or more carbohydrates;
- a component (ii) in form of one or more compounds selected from sulfamic acid, derivatives of sulfamic acid or any salt thereof.

The binder composition may be a composition comprising at least on hydrocolloid prior to curing. Preferably, the at least one hydrocolloid is selected from the group consisting of gelatin, pectin, starch, alginate, agar agar, carrageenan, gellan gum, guar gum, gum arabic, locust bean gum, xanthan gum, cellulose derivatives such as carboxymethylcellulose, arabinoxylan, cellulose, curdlan, β-glucan.

Preferably, the coherent layer is hydrophilic, that is, it attracts water. Hydrophilic has its normal meaning in the art. The inventors have surprisingly discovered that the coherent layer is sufficiently hydrophilic when a hydrophobic, or hydrophilic binder composition is used, as described below.

The hydrophilicity of a sample of MMVF substrate can be measured by determining the sinking time of a sample. A sample of MMVF substrate having dimensions of 100x100x15 mm to 100x100x40 mm is required for determining the sinking time. A container with a minimum size of 200x200x200 mm is filled with water. The sinking time is the time from when the sample first contacts the water surface to the time when the test specimen is completely submerged. The sample is placed in contact with the water in such a way that a cross-section of 100x100 mm first touches the water. The sample will then need to sink a distance of just over 65mm in order to be completely submerged. The faster the sample sinks, the more hydrophilic the sample is. The MMVF substrate is considered hydrophilic if the sinking time is less than 240 s. Preferably the sinking time is less than 100 s, more preferably less than 60 s, most preferably 50 s . In practice, the MMVF substrate may have a sinking time of 50 s or less.

The advantages of the coherent layer being hydrophilic are that it allows the shock pad to absorb and drain water. Using a shock pad according to this embodiment prolongs the usability of the artificial sports field as the shock pad absorbs water from the ground, and stores the water until it can dissipate back into the surrounding ground. The shock pad can actively prevent or treat flooding by absorbing water. The shock pad according to the present invention can prolong usability of the sports field by decreasing the surface temperature i.e. surface cooling. This is because the shock pad can store water and can transport it upwards. Therefore, the area between the sports field surface (i.e. artificial grass) remains moist and the temperature is kept stable through evaporation.

Preferably the water holding capacity of the coherent layer is at least 50 % of the volume of the coherent layer, preferably at least 60%, most preferably at least 70 %. The greater the water holding capacity, the more water can be stored for a given coherent layer volume. The water holding capacity of the coherent layer is high due to the open pore structure of the MMVF.

Preferably the amount of water that is retained by the coherent layer when it emits water is less than 20 %vol, preferably less than 10 %vol, most preferably less than 5 %vol based on the volume of the coherent layer. The water retained may be 2 to 20 %vol, such as 5 to 10 %vol. The lower the amount of water retained by the coherent layer, the greater the capacity of the coherent layer to take on more water.

Preferably the buffering capacity of the coherent layer, that is the difference between the maximum amount of water that can be held, and the amount of water that is retained when the coherent layer gives off water, is at least 60 %vol, preferably at least 70 %vol, preferably at least 80 %vol. The buffering capacity may be 60 to 90 %vol, such as 60 to 85 %vol based on the volume of the coherent layer. The advantage of such a high buffering capacity is that the coherent layer can buffer more water for a given volume, that is the coherent layer can store a high volume of water when required, and release a high volume of water into the surrounding ground once the has ground dried out. The buffering capacity is so high because MMVF substrate requires a low suction pressure to remove water from the MMVF coherent layer.

The water holding capacity, the amount of water retained and the buffering capacity of the coherent layer can each be measured in accordance with EN 13041 - 1999.

Preferably, the at least one coherent layer is substantially free from oil. By this, it is meant that the coherent layer comprises less than 1 wt% oil, preferably less than 0.5 wt% of oil. Most preferably the coherent layer is free from oil. By this it is meant that the coherent layer has 0 wt% of oil. Oil is typically added to MMVF substrates which are to be used for purposes such as sound, insulation, thermal insulation and fire protection. However, the inventors have surprisingly discovered that the coherent plate is sufficiently hydrophilic to absorb and drain water when it is free from oil or substantially free from oil. In this embodiment, the binder composition may be hydrophilic or hydrophobic, as discussed above. Preferably, when the binder composition is hydrophobic, the coherent plate is free from or substantially free from oil.

Hydrophilicity of the coherent layer may be defined by the hydraulic conductivity. Preferably, the at least one coherent layer has a hydraulic conductivity of 5 m/day to 200 m/day, preferably 10 m/day to 50 m/day. Hydraulic conductivity is measured in accordance with ISO 17312:2005. The advantage of this hydraulic conductivity is that the shock pad can absorb excess water and transfer it away from the sports field with sufficient speed to prevent flooding. As discussed above, this may be achieved by having a coherent plate that is free from or substantially free from oil. The binder composition may be hydrophobic or hydrophilic, as defined above.

The at least one coherent layer may be made by any of the methods known to those skilled in the art for production of MMVF products. In general, a mineral charge is provided, which is melted in a furnace to form a mineral melt. The melt is then formed into fibres by means of centrifugal fiberisation e.g. using a spinning cup or a cascade spinner, to form a cloud of fibres. These fibres are then collected and consolidated. Binder is usually added at the fiberisation stage by spraying into the cloud of forming fibres. These methods are well known in the art.

In one embodiment, the coherent plate comprises only one coherent layer. Preferably, the one coherent layer forms the coherent plate i.e. no further layers are present.

In another embodiment, the coherent plate may comprise at least two coherent layers: a first coherent layer and a further coherent layer. This embodiment is shown in Figure 2. The shock pad (10) comprises a coherent plate (20) having upper and lower major surfaces wherein the coherent plate comprises at least one coherent layer (30a) comprising man-made vitreous fibres (MMVF) bonded with a cured binder composition. The coherent plate (20) further comprises a further coherent layer (30b) comprising man-made vitreous fibres (MMVF) bonded with a cured binder composition.

The shock pad further comprises an upper membrane layer (40a) bonded to the upper major surface of the coherent plate (20) and a lower membrane layer (40b) bonded to the lower major surface of the coherent plate (20).

In this embodiment, the first coherent layer is preferably as described above i.e. the at least one coherent layer. The advantage of having a coherent plate with two coherent layers is that it can be used to improve durability of the shock pad whilst meeting the requirements for sports performance (e.g. shock absorption and energy restitution).

In this embodiment, the further coherent layer preferably has a thickness in the range of 3 mm to 10 mm, preferably 5 mm to 8 mm. This means that, when the coherent plate comprises two coherent layers, the total thickness of the coherent plate if preferably 15 mm to 50 mm.

In this embodiment, the further coherent layer preferably has a density in the range of 175 kg/m³ to 300 kg/m³, preferably 200 kg/m³ to 260 kg/m³, most preferably 235 kg/m³. Preferably, the further coherent layer has a different density to that of the first coherent layer. Preferably, the further coherent layer has a lower density to that of the first coherent layer.

In this embodiment, the further coherent layer and the first coherent layer are preferably bonded together. This may be achieved by producing the two layers simultaneously and curing them together. Preferably the further coherent layer is positioned below the first coherent layer. Preferably, the further coherent layer forms the lower surface of the coherent plate and the first coherent layer forms the upper surface of the coherent plate.

The further coherent layer may have any of the above described preferable features of the at least one coherent layer.

Preferably the further coherent layer comprises 1.0 wt% to 6.0 wt% of cured binder composition, preferably 2.5 wt% to 4.5 wt%, most preferably 3.0 wt% to 3.8 wt% based on the weight of the coherent layer. The advantage associated with this range of 3.0 wt% to 3.8 wt% is that it allows the shock pad to have the required stiffness and elasticity. The binder composition in the present invention may be hydrophilic or hydrophobic. The binders may be any of those binder compositions defined above.

Preferably, the coherent layer is hydrophilic, that is, it attracts water. The hydrophilicity of a sample of MMVF substrate can be measured as described above for the at least one coherent layer.

The advantages of the further coherent layer being hydrophilic are that it allows the shock pad to absorb and drain water. Using a shock pad according to this embodiment prolongs the usability of the artificial sports field as the shock pad absorbs water from the ground, and stores the water until it can dissipate back into the surrounding ground. The shock pad can actively prevent or treat flooding by absorbing water. The shock pad according to the present invention can prolong usability of the sports field by decreasing the surface temperature. This is because the shock pad can store water and can transport it upwards. Therefore, the area between the sports field surface (i.e. artificial grass) remains moist and the temperature is kept under control through evaporation

Preferably, the further coherent layer is substantially free from oil. By this, it is meant that the further coherent layer comprises less than 1 wt% oil, preferably less than 0.5 wt% of oil. Most preferably the further coherent layer is free from oil. By this it is meant that the further coherent layer has 0 wt% of oil. Oil is typically added to MMVF substrates which are to be used for purposes such as sound, insulation, thermal insulation and fire protection. However, the inventors have surprisingly discovered that the coherent plate is sufficiently hydrophilic to absorb and drain water when it is free from oil or substantially free from oil. In this embodiment, the binder composition may be hydrophilic, amphiphilic or hydrophobic, as discussed above. Preferably, when the binder composition is hydrophobic or amphiphilic, the coherent plate is free from or substantially free from oil.

Hydrophilicity of the coherent layer may be defined by the hydraulic conductivity. Preferably, the further coherent layer has a hydraulic conductivity of 5 m/day to 200 m/day, preferably 10 m/day to 50 m/day. Hydraulic conductivity is measured in accordance with ISO 17312:2005. The advantage of this hydraulic conductivity is that the shock pad can absorb excess water and transfer it away from the sports field with sufficient speed to prevent flooding. As discussed above, this may be achieved by having a coherent plate that is free from or substantially free from oil. The binder composition may be hydrophobic or hydrophilic, as defined above.

In a preferred embodiment, the at least one coherent layer has a thickness of 15 mm and a density of 275 kg/m³; and the further coherent layer has a thickness of 5 to 8 mm and a density of 235 kg/m³. The advantage of this embodiment is that durability of the shock pad can be improved whilst meeting the requirements for sports performance (e.g. shock absorption and energy restitution). The top layer improves durability and the bottom layer optimises the shock absorption and energy restitution.

Preferably the coherent plate is hydrophilic. This can be achieved as described above for the at least one coherent layer.

Preferably the coherent plate is vertically compressed by less than 10%, more preferably by 1% to 9%, most preferably by 3% to 8% of its original vertical thickness. This is achieved by compression treatment or pre-treatment. The advantage of this treatment is that the shock pad will deform less when in position in the sports fields i.e. it results in a reduced vertical deformation. The criteria which must be met for football and hockey artificial fields include a specific vertical deformation value. The inventors surprisingly discovered that subjecting the coherent plate to a compression treatment, in which it is compressed by less than 10% of its original vertical thickness, reduces the vertical deformation value of the shock pad in use.

The compression treatment may be carried out by any method, however, it is preferred that the coherent plate is subjected to compression treatment by rolling through one or more pairs of rollers.

The coherent plate according to the present invention is bonded to an upper membrane layer and a lower membrane layer. The upper membrane layer is bonded to the upper major surface of the coherent plate. The lower membrane layer is bonded to the lower major surface of the coherent plate.

The advantage of having an upper membrane layer is that it absorbs the point loads from above. For example, when the sports field is in use, this will put pressure on the shock pads. The upper membrane layer allows the shock pad to meet the strict requirements of hockey and football artificial pitches.

The advantage of having a lower membrane layer is that it absorbs the point loads from below. For example, the shock pad may be positioned in the ground on an uneven surface, such as on a layer of gravel. When the sports field is in use, this will create point loads on the bottom layer of the shock pad. The lower membrane layer allows the shock pad to meet the strict requirements of hockey and football artificial pitches.

The advantage of having the upper and lower membrane layers bonded to the coherent layer is that it gives a significantly higher resistance to point loads compared to non-attached membranes. It is also easier to install a single product, which simplifies the installation process.

The upper membrane layer and the lower membrane are preferably glued or heat melted to the coherent plate. Most preferably ethylene vinyl acetate (EVA) or polyethylene (PE) glue is used to bond the upper and lower membrane layers to the coherent plate.

Preferably, the upper membrane layer extends across and is bonded to the entire upper surface of the coherent plate. Preferably, the lower membrane layer extends across and is bonded to the entire lower surface of the coherent plate. This results in a more stable and durable shock pad.

Preferably, the upper membrane layer comprises glass fibres, polymer fibres, glass microfibers or a mixture thereof. Most preferably it comprises a layer of glass fibres, preferably non-woven glass fibres.

In addition, the upper membrane layer preferably comprises a mesh layer, wherein the mesh layer comprises glass fibres, polymer fibres or a mixture thereof. Most preferably the upper membrane layer comprises a mesh of glass fibres, wherein the yarn in the mesh has 25 tex to 40 tex, more preferably 32 tex to 36 tex.

Preferably, the upper membrane layer comprises a layer of non-woven glass fibres and a mesh layer which are integrated i.e. bonded together.

Preferably, the lower membrane layer comprises glass fibres, polymer fibres, glass microfibers or a mixture thereof. Most preferably it comprises a layer of glass fibres, preferably non-woven glass fibres.

In addition, the lower membrane layer preferably comprises a mesh layer, wherein the mesh layer comprises glass fibres, polymer fibres or a mixture thereof. Most preferably the lower membrane layer comprises a mesh of glass fibres, wherein the yarn in the mesh has 25 tex to 40 tex, more preferably 32 tex to 36 tex.

Preferably, the lower membrane layer comprises a layer of non-woven glass fibres and a mesh layer which are integrated i.e. bonded together.

A sports field and an artificial grass structure may include a base layer, above which the shock pad of the invention is positioned. The top layer of artificial grass is subsequently positioned above the shock pad. The shock pad may include any of the preferred features discussed in detail above.

This is shown in Figure 3. The shock pad (100) as described herein may be positioned above a base layer (200). A top layer (300) of artificial grass may then be positioned above the shock pad.

The present invention also relates to a method of producing a shock pad. The method comprises the steps of:
(i) providing a coherent plate having upper and lower major surfaces, wherein the coherent plate comprises at least one coherent layer comprising man-made vitreous fibres (MMVF) bonded with a cured binder composition;
(ii) bonding the upper membrane layer to the upper surface of the coherent plate
(iii) bonding the lower membrane layer to the lower surface of the coherent plate
wherein the at least one coherent layer has a thickness in the range of 12 mm to 40 mm and a density in the range of 175 kg/m³ to 300 kg/m³.

The shock pad may have any of the preferred features discussed in detail above.

Preferably, the method according to the present invention further comprises the step of pre-treating the coherent plate by compression, wherein the compression vertically deforms the coherent plate by less than 10%, preferably by 1% to 9%, preferably by 3% to 8%. This is achieved by compression treatment or pre-treatment. The advantage of this treatment is that the shock pad will deform less when in position in the sports fields i.e. it results in a reduced vertical deformation. The criteria which must be met for football and hockey artificial fields include a specific vertical deformation value. The inventors surprisingly discovered that subjecting the coherent plate to a compression treatment, in which it is compressed by less than 10% of its original vertical thickness, reduces the vertical deformation value of the shock pad in use.

The compression treatment may be carried out by any method, however, it is preferred that the coherent plate is subjected to compression treatment by rolling through one or more pairs of rollers.

In one preferred embodiment, the bonding in step (ii) and/or step (iii) is by a glue or adhesive.

In an alternative embodiment, the bonding in step (ii) and/or step (iii) is by placing a binder between the membrane layer and coherent plate, and curing the binder.

The present invention also relates to a method of using a shock pad to provide a shock-absorbing surface in a sports field, comprising the step of: positioning a shock pad or an array of shock pads beneath the surface of a sports field, wherein the shock pad comprises:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate,
(iii) a lower membrane layer bonded to the lower major surface of the coherent plate,
wherein the at least one coherent layer has a thickness in the range of 12 mm to 40 mm and a density in the range of 175 kg/m3 to 300 kg/m3.

The present invention also relates to use of a shock pad for absorbing shock in a sports field, wherein the shock pad comprises:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate,
(iii) a lower membrane layer bonded to the lower major surface of the coherent plate,
wherein the at least one coherent layer has a thickness in the range of 12 mm to 40 mm and a density in the range of 175 kg/m³ to 300 kg/m³.

The shock pad may have any of the preferred features discussed in detail above.

The present invention also relates to use of a shock pad for absorbing and/or draining water in a sports field, wherein the shock pad comprises:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate,
(iii) a lower membrane layer bonded to the lower major surface of the coherent plate,
wherein the at least one coherent layer has a thickness in the range of 12 mm to 40 mm and a density in the range of 175 kg/m³ to 300 kg/m³.

The shock pad may have any of the preferred features discussed in detail above.

The present invention also relates to use of a shock pad for cooling the surface temperature of a sports field, wherein the shock pad comprises:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate,
(iii) a lower membrane layer bonded to the lower major surface of the coherent plate,
wherein the at least one coherent layer has a thickness in the range of 12 mm to 40 mm and a density in the range of 175 kg/m³ to 300 kg/m³.

The shock pad may have any of the preferred features discussed in detail above. The term "cooling" has its normal meaning in the art i.e. reducing the temperature.

### Examples

Two embodiments of the invention were analysed in line with shock pad requirements according the European Synthetic Turf Organisation (ESTO) Guidelines. A dynamic fatigue test according to standard ISO 3385 was performed on each shock pad.

Example 1 is a shock pad with a coherent plate comprising one coherent layer comprising MMVF. The coherent layer is 20 mm thick and has a density of 235 kg/m³. The shock pad comprises an upper and lower membrane comprising non-woven glass fibres. The shock pad was compressed by less than 10% of its original vertical thickness before the membranes were attached.

Example 2 is a shock pad with a coherent plate comprising two coherent layers, both of which comprise MMVF. The at least one coherent layer (top layer) has a thickness of 15 mm and a density of 275 kg/m³. The further coherent layer (bottom layer) has a thickness of 5 mm and a density of 235 kg/m³. The shock pad comprises an upper and lower membrane comprising a non-woven and mesh of glass fibres. The shock pad was compressed by less than 10% of its original vertical thickness before the membranes were attached.

The results to the dynamic fatigue test are shown below in Table 1. The shock absorption was measured before and after the test and the permanent deformation was measured after the test.

**Table 1.**

| Exampl e No. | Thickness [mm] | Density [kg/m³] | Shock absorption - before test [%] | Shock absorption - after test [%] | Permanent deformation [%] |
|---|---|---|---|---|---|
| 1 | 20 | 235 | 54.3 | 53.6 | 1.2% |
| 2 | 15 (top) | 275 (top) | 48.1 | 47.6 | ≈ 0% |
| | 5 (bottom) | 235 (bottom) | | | |

From Table 1, it can be seen that the shock absorption tested (on only the shock pad) for Example 1 was 53.6% and for Example 2 was 47.6% after test. The ESTO guidelines for a shock pad require that the shock absorption is ≥ 20%.

The loss of absorption for Example 1 was 0.7% and for Example 2 was 0.5%. The ESTO guideline for a shock pad require that loss of shock absorption < 5%.

The change in thickness for Example 1 was 1.2% and Example 2 was almost 0%. The ESTO guideline for a shock pad requires that change in thickness is ≤ 15%. Therefore, Example 1 and 2 meet the requirements of the ESTO guideline.

Example 2, in accordance with the invention, was analyzed in line with shock pad requirements according FIFA Quality Program for football turf - Handbook of Requirements - October 2015 Edition.

Example 2 was tested in accordance with EN TS 16717. Shock absorption, vertical deformation and energy restitution were determined. Properties were directly measured on the shock pad, wet and dry. The wet shock pad was prepared by saturating the shock pad in water for one day.

The results to the tests are shown below in Table 2.

**Table 2.**

| Property | Dry | Saturated |
|---|---|---|
| Shock absorption | 48 % | 51 % |
| Vertical deformation | 6.2 mm | 7.1 mm |
| Energy restitution | 66 % | 47 % |

From Table 2, it can be seen that the shock absorption tested (on only the shockpad) for Example 2 was 48% dry and 51% saturated. FIFA Handbook requires an absolute force reduction of < 5%. The "absolute force reduction" is the difference between the shock absorption of a wet shock pad and a dry shock pad. Therefore, Example 2 meets this requirement related to absolute shock absorption, as it has a value of 3 %.

Example 2, in accordance with the invention, was analyzed in line with artificial sport field requirements.

Example 2 was tested with a DOMO^{®} Fastplay artificial mat (non-infill) according to the Lisport test - EN 15306. The analyses the exposure of synthetic turf systems to simulated wear.

The result to the test is shown below in Table 3.

**Table 3.**

| Property | Before wear | After wear |
|---|---|---|
| Shock absorption | 59% | 55.6% |
| Vertical deformation | 8,3 mm | 7,1 mm |
| Energy restitution | 50% | 55% |
| Thickness shockpad | 23,9 mm | 23,7 mm |

From Table 3, it can be seen that the shock absorption (tested in a system) for Example 2 was 55.6% after wear. The FIH Hockey Turf and Field Requirements - Edition 2017 require that the shock absorption is between 45 - 60%. Therefore, Example 2 meets the requirements of FIH for hockey pitches.

The vertical deformation was 7.1 mm after wear. The FIH Hockey Turf and Field Requirements - Edition 2017 require that the vertical deformation is between 2 and 9 mm. Therefore, Example 2 meets the requirements of FIH for hockey pitches.

The energy restitution after wear was 55 %. The FIH Hockey Turf and Field Requirements - Edition 2017 require that the energy restitution is between 30 -55 %. Therefore, Example 2 meets the requirements of FIH for hockey pitches.

## Claims

1. A shock pad (1, 10) comprising:
(i) a coherent plate (2, 20) having upper and lower major surfaces, wherein the coherent plate comprises at least one coherent layer (3, 30A) comprising man-made vitreous fibres (MMVF) bonded with a cured binder composition;
(ii) an upper membrane layer (4A, 40A) bonded to the upper major surface of the coherent plate (2, 20);
(iii) a lower membrane layer (4B, 40B) bonded to the lower major surface of the coherent plate (2, 20);
wherein the at least one coherent layer (3, 30A) has a thickness in the range of 12 mm to 40 mm and a density in the range of 175 kg/m³ to 300 kg/m³.

2. The shock pad (1, 10) according to claim 1, wherein the at least one coherent layer (3, 30A) has a thickness in the range of 15 mm to 35 mm, preferably 18 mm to 28 mm, most preferably 20 mm to 22 mm.

3. The shock pad (1, 10) according to claim 1 or 2, wherein the at least one coherent layer (3, 30A) has a density in the range of 220 kg/m³ to 280 kg/m³, preferably 275 kg/m³.

4. The shock pad (1, 10) according to any preceding claim wherein the at least one coherent layer (3, 30A) comprises 1.0 wt% to 6.0 wt% of cured binder composition, preferably 2.5 wt% to 4.5 wt%, most preferably 3.0 wt% to 3.8 wt%.

5. The shock pad (1, 10) according to any preceding claim wherein the at least one coherent layer is hydrophilic, and/or wherein the at least one coherent layer (3, 30A) has a hydraulic conductivity of 5 m/day to 200 m/day, preferably 10 m/day to 50 m/day.

6. The shock pad (1, 10) according to any preceding claim, wherein the at least one coherent layer (3, 30A) is free from oil or substantially free from oil.

7. The shock pad (1, 10) according to any preceding claim, wherein the coherent plate (2, 20) further comprises a further coherent layer (30B) comprising man-made vitreous fibres (MMVF) bonded with a cured binder composition.

8. The shock pad (1, 10) according to claim 7, wherein the further coherent layer (30B) is hydrophilic, and/or wherein the further coherent layer (30B) has a hydraulic conductivity of 5 m/day to 200 m/day, preferably 10 m/day to 50 m/day.

9. The shock pad (1, 10) according to any preceding claim, wherein the upper membrane layer (4A, 40A) and/or the lower membrane layer (4B, 40B) comprises glass fibres, polymer fibres or a mixture thereof,
preferably wherein the upper membrane layer (4A, 40A) and/or the lower membrane layer (4B, 40B) comprises a mesh layer, wherein the mesh layer comprises glass fibres, polymer fibres or a mixture thereof,
more preferably wherein the upper membrane layer (4A, 40A) and/or the lower membrane layer (4B, 40B) comprises a layer of non-woven glass fibres integrated with a mesh layer comprising glass fibres.

10. The shock pad (1, 10) according to any preceding claim, wherein the cured binder composition and/or the coherent plate (2, 20) is hydrophilic.

11. The shock pad (1, 10) according to any preceding claim, wherein the coherent plate (2, 20) has been vertically compressed after curing of the binder by less than 10%, preferably by 1% to 9%, most preferably by 3% to 8% of its original vertical thickness.

12. A method of producing a shock pad (1, 10) comprising the steps of:
(i) providing a coherent plate (2, 20) having upper and lower major surfaces, wherein the coherent plate (2, 20) comprises at least one coherent layer (3, 30A) comprising man-made vitreous fibres (MMVF) bonded with a cured binder composition;
(ii) bonding the upper membrane layer (4A, 40A) to the upper major surface of the coherent plate (2, 20)
(iii) bonding the lower membrane layer (4B, 40B) to the lower major surface of the coherent plate (2, 20)
wherein the at least one coherent layer (3, 30A) has a thickness in the range of 12 mm to 40 mm and a density in the range of 175 kg/m³ to 300 kg/m³.

13. The method according to claim 12, further comprising the step of pre-treating the coherent plate (2, 20) by compression prior to steps (ii) and (iii), wherein the compression vertically deforms the coherent plate (2, 20) by less than 10%, preferably by 1% to 9%, preferably by 3% to 8% of its original vertical thickness.

14. The method according to any of claims 12 to 13, wherein the bonding in step (ii) and/or step (iii) is by:
(a) a glue or adhesive; or
(b) placing a binder between the membrane layer and coherent plate (2, 20), and curing the binder.

15. A method of using a shock pad (1, 10) to provide a shock-absorbing surface in a sports field, comprising the step of: positioning a shock pad or an array of shock pads beneath the surface of a sports field, wherein the shock pad comprises:
(i) a coherent plate (2, 20) having upper and lower major surfaces, wherein the coherent plate (2, 20) comprises at least one coherent layer (3, 30A) comprising man-made vitreous fibres (MMVF) bonded with a cured binder composition;
(ii) an upper membrane layer (4A, 40A) bonded to the upper major surface of the coherent plate (2, 20),
(iii) a lower membrane layer (4B, 40B) bonded to the lower major surface of the coherent plate (2, 20),
wherein the at least one coherent layer (3, 30A) has a thickness in the range of 12 mm to 40 mm and a density in the range of 175 kg/m³ to 300 kg/m³.

16. Use of a shock pad for absorbing and/or draining water in a sports field, wherein the shock pad comprises:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate,
(iii) a lower membrane layer bonded to the lower major surface of the coherent plate,
wherein the at least one coherent layer has a thickness in the range of 12 mm to 40 mm and a density in the range of 175 kg/m³ to 300 kg/m³.

17. Use of a shock pad for cooling the surface temperature of a sports field, wherein the shock pad comprises:
(i) a coherent plate having upper and lower major surfaces, wherein the coherent plate comprises at least one coherent layer comprising man-made vitreous fibres (MMVF) bonded with a cured binder composition;
(ii) an upper membrane layer bonded to the upper major surface of the coherent plate,
(iii) a lower membrane layer bonded to the lower major surface of the coherent plate,
wherein the at least one coherent layer has a thickness in the range of 12 mm to 40 mm and a density in the range of 175 kg/m³ to 300 kg/m³.

18. The method or use according to any of claims 12 to 17, further comprising any of the features of claims 2 to 11.

## Patentansprüche

1. Stoßdämpfung (1, 10), umfassend:
i) eine kohärente Platte (2, 20), die obere und untere Hauptflächen aufweist, wobei die kohärente Platte mindestens ein kohärente Schicht (3, 30A), umfassend künstliche glasartige Fasern (MMVF), die mit einer ausgehärteten Bindemittelzusammensetzung verklebt sind, umfasst;
ii) eine obere Membranschicht (4A, 40A), die mit der oberen Hauptfläche der kohärenten Platte (2, 20) verklebt ist;
iii) eine untere Membranschicht (4B, 40B), die mit der unteren Hauptfläche der kohärenten Platte (2, 20) verklebt ist;
wobei die mindestens eine kohärente Schicht (3, 30A) eine Dicke im Bereich von 12 mm bis 40 mm und eine Dichte im Bereich von 175 kg/m³ bis 300 kg/m³ aufweist.

2. Stoßdämpfung (1, 10) nach Anspruch 1, wobei die mindestens eine kohärente Schicht (3, 30A) eine Dicke im Bereich von 15 mm bis 35 mm, bevorzugt 18 mm bis 28 mm, noch bevorzugter 20 mm bis 22 mm aufweist.

3. Stoßdämpfung (1, 10) nach Anspruch 1 oder 2, wobei die mindestens eine kohärente Schicht (3, 30A) eine Dicke im Bereich von 220 kg/m³ bis 280 kg/m³, bevorzugt 275 kg/m³ aufweist.

4. Stoßdämpfung (1, 10) nach einem vorhergehenden Anspruch, wobei die mindestens eine kohärente Schicht (3, 30A) 1,0 Gew.-% bis 6,0 Gew.-% einer ausgehärteten Bindemittelzusammensetzung, bevorzugt 2,5 Gew.-% bis 4,5 Gew.-%, noch bevorzugter 3,0 Gew.-% bis 3,8 Gew.-% umfasst.

5. Stoßdämpfung (1, 10) nach einem vorhergehenden Anspruch, wobei die mindestens eine kohärente Schicht hydrophil ist und /oder wobei die mindestens eine kohärente Schicht (3, 30A) eine hydraulische Leitfähigkeit von 5 m/Tag bis 200 m/Tag, bevorzugt 10 m/Tag bis 50 m/Tag aufweist.

6. Stoßdämpfung (1, 10) nach einem vorhergehenden Anspruch, wobei die mindestens eine kohärente Schicht (3, 30A) frei von Öl oder im Wesentlichen frei von Öl ist.

7. Stoßdämpfung (1, 10) nach einem vorhergehenden Anspruch, wobei die kohärente Platte (2, 20) ferner eine weitere kohärente Schicht (30B), umfassend künstliche glasartige Fasern (MMVF), die mit einer ausgehärteten Bindemittelzusammensetzung verklebt sind, umfasst.

8. Stoßdämpfung (1, 10) nach Anspruch 7, wobei die weitere kohärente Schicht (30B) hydrophil ist und/oder wobei die weitere kohärente Schicht (30B) eine hydraulische Leitfähigkeit von 5 m/Tag bis 200 m/Tag, bevorzugt 10 m/Tag bis 50 m/Tag aufweist.

9. Stoßdämpfung (1, 10) nach einem vorhergehenden Anspruch, wobei die obere Membranschicht (4A, 40A) und/oder die untere Membranschicht (4B, 40B) Glasfasern, Polymerfasern oder eine Mischung davon umfasst, wobei bevorzugt die obere Membranschicht (4A, 40A) und/oder die untere Membranschicht (4B, 40B) eine Netzschicht umfasst, wobei die Netzschicht Glasfasern, Polymerfasern oder eine Mischung davon umfasst, wobei noch bevorzugter die obere Membranschicht (4A, 40A) und/oder die untere Membranschicht (4B/40B) eine Schicht aus Glasfaservlies, das in eine Glasfasern umfassende Netzschicht integriert ist, umfasst.

10. Stoßdämpfung (1, 10) nach einem vorhergehenden Anspruch, wobei die ausgehärtete Bindemittelzusammensetzung und/oder die kohärente Platte (2, 20) hydrophil ist.

11. Stoßdämpfung (1, 10) nach einem vorhergehenden Anspruch, wobei die kohärente Platte (2, 20) nach dem Aushärten des Bindemittels um weniger als 10 %, bevorzugt um 1 % bis 9 %, noch bevorzugter um 3 % bis 8 % ihrer ursprünglichen vertikalen Dicke komprimiert wurde.

12. Verfahren zur Herstellung einer Stoßdämpfung (1, 10), umfassend die Schritte:
(i) Bereitstellen einer kohärenten Platte (2, 20), die obere und untere Hauptflächen aufweist, wobei die kohärente Platte (2, 20) mindestens ein kohärente Schicht (3, 30A), umfassend künstliche glasartige Fasern (MMVF), die mit einer ausgehärteten Bindemittelzusammensetzung verklebt sind, umfasst;
ii) Verkleben der oberen Membranschicht (4A, 40A) mit der oberen Hauptfläche der kohärenten Platte (2, 20);
iii) Verkleben der unteren Membranschicht (4B, 40B) mit der unteren Hauptfläche der kohärenten Platte (2, 20);
wobei die mindestens eine kohärente Schicht (3, 30A) eine Dicke im Bereich von 12 mm bis 40 mm und eine Dichte im Bereich von 175 kg/m³ bis 300 kg/m³ aufweist.

13. Verfahren nach Anspruch 12, ferner umfassend den Schritt des Vorbehandelns der kohärenten Platte (2, 20) durch Kompression vor den Schritten (ii) und (iii), wobei die Kompression die kohärente Platte (2, 20) vertikal um weniger als 10 %, bevorzugt um 1 % bis 9 %, noch bevorzugter um 3 % bis 8 % ihrer ursprünglichen Dicke verformt.

14. Verfahren nach einem der Ansprüche 12 bis 13, wobei das Verkleben in Schritt (ii) und/oder Schritt (iii) durch Folgendes erfolgt:
(a) einen Leim oder Klebstoff; oder
(b) Aufbringen eines Bindemittels zwischen der Membranschicht und der kohärenten Platte (2, 20) und Aushärten des Bindemittels.

15. Verfahren zur Anwendung einer Stoßdämpfung (1, 10), um eine stoßdämpfende Oberfläche auf einem Sportplatz bereitzustellen, umfassend den Schritt des Positionierens einer Stoßdämpfung oder einer Reihe von Stoßdämpfungen unter der Oberfläche eines Sportplatzes, wobei die Stoßdämpfung umfasst:
(i) eine kohärente Platte (2, 20), die obere und untere Hauptflächen aufweist, wobei die kohärente Platte (2, 20) mindestens ein kohärente Schicht (3, 30A), umfassend künstliche glasartige Fasern (MMVF), die mit einer ausgehärteten Bindemittelzusammensetzung verklebt sind, umfasst;
ii) eine obere Membranschicht (4A, 40A), die mit der oberen Hauptfläche der kohärenten Platte (2, 20) verklebt ist;
iii) eine untere Membranschicht (4B, 40B), die mit der unteren Hauptfläche der kohärenten Platte (2, 20) verklebt ist;
wobei die mindestens eine kohärente Schicht (3, 30A) eine Dicke im Bereich von 12 mm bis 40 mm und eine Dichte im Bereich von 175 kg/m³ bis 300 kg/m³ aufweist.

16. Anwendung einer Stoßdämpfung zum Adsorbieren und/oder Ableiten von Wasser auf einem Sportplatz, wobei die Stoßdämpfung umfasst:
(i) eine kohärente Platte, die obere und untere Hauptflächen aufweist, wobei die kohärente Platte mindestens ein kohärente Schicht, umfassend künstliche glasartige Fasern (MMVF), die mit einer ausgehärteten Bindemittelzusammensetzung verklebt sind, umfasst;
ii) eine obere Membranschicht, die mit der oberen Hauptfläche der kohärenten Platte verklebt ist;
iii) eine untere Membranschicht, die mit der unteren Hauptfläche der kohärenten Platte verklebt ist;
wobei die mindestens eine kohärente Schicht eine Dicke im Bereich von 12 mm bis 40 mm und eine Dichte im Bereich von 175 kg/m³ bis 300 kg/m³ aufweist.

17. Anwendung einer Stoßdämpfung zum Kühlen der Oberflächentemperatur eines Sportplatzes, wobei die Stoßdämpfung umfasst:
i) eine kohärente Platte, die obere und untere Hauptflächen aufweist, wobei die kohärente Platte mindestens ein kohärente Schicht, umfassend künstliche glasartige Fasern (MMVF), die mit einer ausgehärteten Bindemittelzusammensetzung verklebt sind, umfasst;
ii) eine obere Membranschicht, die mit der oberen Hauptfläche der kohärenten Platte verklebt ist;
iii) eine untere Membranschicht, die mit der unteren Hauptfläche der kohärenten Platte verklebt ist;
wobei die mindestens eine kohärente Schicht eine Dicke im Bereich von 12 mm bis 40 mm und eine Dichte im Bereich von 175 kg/m³ bis 300 kg/m³ aufweist.

18. Verfahren oder Anwendung nach einem der Ansprüche 12 bis 17, ferner umfassend eines der Merkmale der Ansprüche 2 bis 11.

## Revendications

1. Couche amortissante (1, 10) comprenant :
(i) une plaque cohérente (2, 20) ayant des surfaces principales supérieure et inférieure, où la plaque cohérente comprend au moins une couche cohérente (3, 30A) comprenant des fibres vitreuses synthétiques (FVS) liées au moyen d'une composition liante durcie ;
(ii) une couche membranaire supérieure (4A, 40A) liée à la surface principale supérieure de la plaque cohérente (2, 20) ;
(iii) une couche membranaire inférieure (4B, 40B) liée à la surface principale inférieure de la plaque cohérente (2, 20) ;
où la au moins une couche cohérente (3, 30A) a une épaisseur dans la plage de 12 mm à 40 mm et une densité dans la plage de 175 kg/m³ à 300 kg/m³.

2. Couche amortissante (1, 10) selon la revendication 1, où la au moins une couche cohérente (3, 30A) a une épaisseur dans la plage de 15 mm à 35 mm, préférablement de 18 mm à 28 mm, le plus préférablement de 20 mm à 22 mm.

3. Couche amortissante (1, 10) selon la revendication 1 ou 2, où la au moins une couche cohérente (3, 30A) a une densité dans la plage de 220 kg/m³ à 280 kg/m³, préférablement de 275 kg/m³.

4. Couche amortissante (1, 10) selon l'une quelconque des revendications précédentes, où la au moins une couche cohérente (3, 30A) comprend de 1,0 % en poids à 6,0 % en poids de la composition liante durcie, préférablement de 2,5 % en poids à 4,5 % en poids, le plus préférablement de 3,0 % en poids à 3,8 % en poids.

5. Couche amortissante (1, 10) selon l'une quelconque des revendications précédentes, où la au moins une couche cohérente est hydrophile et/ou où la au moins une couche cohérente (3, 30A) a une conductivité hydraulique qui va de 5 m/jour à 200 m/jour, préférablement de 10 m/jour à 50 m/jour.

6. Couche amortissante (1, 10) selon l'une quelconque des revendications précédentes, où la au moins une couche cohérente (3, 30A) est exempte d'huile ou essentiellement exempte d'huile.

7. Couche amortissante (1, 10) selon l'une quelconque des revendications précédentes, où la plaque cohérente (2, 20) comprend en outre une couche cohérente supplémentaire (30B) comprenant des fibres vitreuses synthétiques (FVS) liées au moyen d'une composition liante durcie.

8. Couche amortissante (1, 10) selon la revendication 7, où la couche cohérente supplémentaire (30B) est hydrophile et/ou où la couche cohérente supplémentaire (30B) a une conductivité hydraulique qui va de 5 m/jour à 200 m/jour, préférablement de 10 m/jour à 50 m/jour.

9. Couche amortissante (1,10) selon l'une quelconque des revendications précédentes, où la couche membranaire supérieure (4A, 40A) et/ou la couche membranaire inférieure (4B, 40B) comprend/comprennent des fibres de verre, des fibres polymères ou un mélange de celles-ci, préférablement où la couche membranaire supérieure (4A, 40A) et/ou la couche membranaire inférieure (4B, 40B) comprend/comprennent une couche à mailles, où la couche à mailles comprend des fibres de verre, des fibres polymères ou un mélange de celles-ci, plus préférablement où la couche membranaire supérieure (4A, 40A) et/ou la couche membranaire inférieure (4B, 40B) comprend/comprennent une couche de fibres de verre non tissées intégrée à une couche à mailles qui comprend des fibres de verre.

10. Couche amortissante (1,10) selon l'une quelconque des revendications précédentes, où la composition liante durcie et/ou la plaque cohérente (2, 20) est/sont hydrophile(s).

11. Couche amortissante (1,10) selon l'une quelconque des revendications précédentes où, après durcissement du liant, la plaque cohérente (2, 20) a été comprimée verticalement de moins de 10 %, préférablement de 1 % à 9 %, le plus préférablement de 3 % à 8 % de son épaisseur verticale originelle.

12. Méthode de production d'une couche amortissante (1, 10) comprenant les étapes qui consistent à :
(i) se munir d'une plaque cohérente (2, 20) ayant des surfaces principales supérieure et inférieure, où la plaque cohérente (2, 20) comprend au moins une couche cohérente (3, 30A) comprenant des fibres vitreuses synthétiques (FVS) liées au moyen d'une composition liante durcie ;
(ii) lier la couche membranaire supérieure (4A, 40A) à la surface principale supérieure de la plaque cohérente (2, 20) ;
(iii) lier la couche membranaire inférieure (4B, 40B) à la surface principale inférieure de la plaque cohérente (2, 20),
où la au moins une couche cohérente (3, 30A) a une épaisseur dans la plage de 12 mm à 40 mm et une densité dans la plage de 175 kg/m³ à 300 kg/m³.

13. Méthode selon la revendication 12 comprenant en outre l'étape qui consiste à prétraiter la plaque cohérente (2, 20) par compression avant les étapes (ii) et (iii), où la compression déforme verticalement la plaque cohérente (2, 20) de moins de 10 %, préférablement de 1 % à 9 %, préférablement de 3 % à 8 % de son épaisseur verticale originelles.

14. Méthode selon l'une quelconque des revendications 12 à 13, où la liaison effectuée à l'étape (ii) et/ou à l'étape (iii) utilise :
(a) une colle ou un adhésif ; ou
(b) la mise en place d'un liant entre la couche membranaire et la plaque cohérente (2, 20) et le durcissement du liant.

15. Méthode d'utilisation d'une couche amortissante (1, 10) pour produire une surface absorbant les chocs sur un terrain de sports, comprenant les étapes qui consistent à : positionner une couche amortissante ou une série de couches amortissantes en dessous de la surface d'un terrain de sports, où la couche amortissante comprend :
(i) une plaque cohérente (2, 20) ayant des surfaces principales supérieure et inférieure, où la plaque cohérente (2, 20) comprend au moins une couche cohérente (3, 30A) comprenant des fibres vitreuses synthétiques (FVS) liées au moyen d'une composition liante durcie ;
(ii) une couche membranaire supérieure (4A, 40A) liée à la surface principale supérieure de la plaque cohérente (2, 20) ;
(iii) une couche membranaire inférieure (4B, 40B) liée à la surface principale inférieure de la plaque cohérente (2, 20) ;
où la au moins une couche cohérente (3, 30A) a une épaisseur dans la plage de 12 mm à 40 mm et une densité dans la plage de 175 kg/m³ à 300 kg/m³.

16. Utilisation d'une couche amortissante pour absorber et/ou drainer l'eau dans un terrain de sports, où la couche amortissante comprend :
(i) une plaque cohérente ayant des surfaces principales supérieure et inférieure, où la plaque cohérente comprend au moins une couche cohérente comprenant des fibres vitreuses synthétiques (FVS) liées au moyen d'une composition liante durcie ;
(ii) une couche membranaire supérieure liée à la surface principale supérieure de la plaque cohérente ;
(iii) une couche membranaire inférieure liée à la surface principale inférieure de la plaque cohérente ;
où la au moins une couche cohérente a une épaisseur dans la plage de 12 mm à 40 mm et une densité dans la plage de 175 kg/m³ à 300 kg/m³.

17. Utilisation d'une couche amortissante pour refroidir la température en surface d'un terrain de sports, où la couche amortissante comprend :
(i) une plaque cohérente ayant des surfaces principales supérieure et inférieure, où la plaque cohérente comprend au moins une couche cohérente comprenant des fibres vitreuses synthétiques (FVS) liées au moyen d'une composition liante durcie ;
(ii) une couche membranaire supérieure liée à la surface principale supérieure de la plaque cohérente ;
(iii) une couche membranaire inférieure liée à la surface principale inférieure de la plaque cohérente ;
où la au moins une couche cohérente a une épaisseur dans la plage de 12 mm à 40 mm et une densité dans la plage de 175 kg/m³ à 300 kg/m³.

18. Méthode ou utilisation selon l'une quelconque des revendications 12 à 17, comprenant en outre l'une quelconque des caractéristiques des revendications 2 à 11.
